# EUROPEAN PATENT SPECIFICATION

(11) **EP 3 570 579 B1**
(45) Date of publication and mention of the grant of the patent: **21.01.2026**
(21) Application number: 17891475.0
(22) Date of filing: 25.12.2017
(51) Int. Cl.: H04W 84/10, H04W 28/02, H04W 16/10, H04W 16/18, H04W 88/06

(54) **BASE STATION SUPPORTING DISTRIBUTED MULTIPLE SCENES, CREATION AND COMMUNICATION METHOD THEREOF AND STORAGE MEDIUM**
BASISSTATION MIT UNTERSTÜTZUNG VON VERTEILTEN MEHRFACHSZENEN, ERZEUGUNGS- UND KOMMUNIKATIONSVERFAHREN DAFÜR UND SPEICHERMEDIUM
STATION DE BASE PRENANT EN CHARGE DES SCÈNES MULTIPLES DISTRIBUÉES, PROCÉDÉ DE CRÉATION ET DE COMMUNICATION ASSOCIÉS ET SUPPORT D'INFORMATIONS

(30) Priority: 10.01.2017 CN 201710017421
(43) Date of publication of application: 20.11.2019
(73) Proprietor: ZTE Corporation, Shenzhen, Guangdong 518057 (CN)
(72) Inventor: REN, Wenjie, Shenzhen, Guangdong 518057 (CN); ZHOU, Chenyun, Shenzhen, Guangdong 518057 (CN)
(74) Representative: Tiburzi, Andrea
(86) International application number: PCT/CN2017/118196
(87) International publication number: WO 2018/130064

(56) References cited:
- WO-A1-2016/008345
- CN-A- 101 599 881
- CN-A- 102 413 541
- CN-A- 102 413 541
- CN-A- 104 486 259
- US-A1- 2006 045 087
- US-A1- 2015 257 147
- US-A1- 2017 208 506
- INTERDIGITAL COMMUNICATIONS: "Control Plane and Connectivity Principles for NR", vol. RAN WG2, no. Gothenburg, Sweden; 20160822 - 20160826, 21 August 2016 (2016-08-21), XP051126685, Retrieved from the Internet <URL:http://www.3gpp.org/ftp/Meetings_3GPP_SYNC/RAN2/Docs/> [retrieved on 20160821]

## Description

### TECHNICAL FIELD

The present invention relates to a field of mobile communication technology and, in particular, to a base station supporting distributed multiple scenes, communication method thereof and storage medium.

### BACKGROUND

At present, research and development of fifth generation mobile communication systems (5G for short) is gradually warming up in the world. The instancy for developing 5G technology has been seen by many countries and mainstream/authoritative standardization organizations, and corresponding research and development promotion plans have been formulated.

Main performance indicators proposed in 5G are very harsh now, main theme of 5G including flexible deployment, energy saving, high speed and massive connections. Therefore, the requirements on 5G may be far from satisfied by using traditional mobile communication network architecture. One of the important research directions is wireless spectrum and air interface, so that 5G mobile communication may give full play to its ultra-strong performance according to specific application scenes.

Main technical scenes with characteristics such as continuous wide area coverage, hot spot with high capacity, low power consumption with huge connections, low delay with high reliability may be summarized from main application scenes, service requirements and challenges of Mobile Internet and Internet of Things. Air interface technology and high-level protocol processes used in these scenes are very different or completely different. Under 4G architecture, all cells under a base station usually have one type of air interface structure; while in the era of 5G, it is necessary to support a terminal with multiple air interface structures to access.

The existing LTE network architecture is a flattened 2G and 3G network architecture. The evolved node base stations (eNBs) in the LTE network architecture directly provide services as a whole function to a user. If the eNBs are used to realize the adaption to specific application scenes in 5G, multiple sets of eNBs are needed for support. This will greatly increase development, deployment and operation costs, and bring a waste of resources. In addition, at present, some specific user groups generally vary in number in a tide manner, and a total number of users in a single scene may not be large. Currently, operators generally establish a network or expand a capacity according to a maximum capacity of each user group, which will also bring a waste of resources.

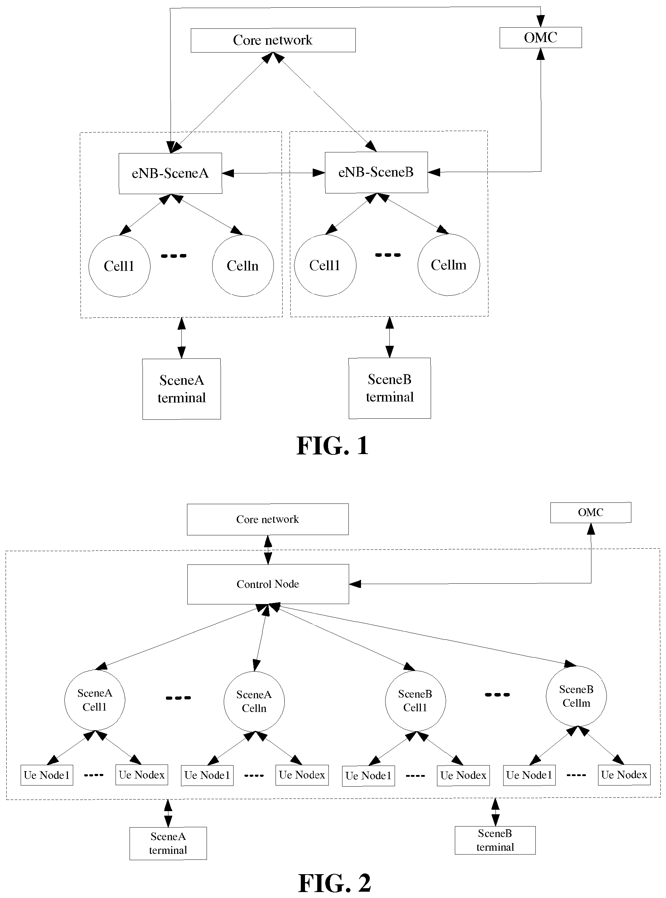

FIG. 1 shows a schematic diagram of a 5G network covering multiple scenes using 4G architecture. The use of 4G architecture for implement 5G network brings following problems:
1) in order to cover multiple scenes at the same time, multiple base stations need to be deployed and have cells of respective standard mounted, thereby resulting in a waste of resources;
2) under the 4G architecture, an air interface structure and a signaling process have a base station level attribute; the single structure of air interface leads to single signaling processing flow, and the signaling process is integrated into a processing behavior of the base station. Under this architecture, if a new air interface structure scene is introduced, a new vision of the base station should be developed, thereby increasing complexity.

Document CN102413541A discloses a node parameter configuring method which mainly comprises the following steps that: an ultimate access node obtains a configuration parameter from a superior access node accessible to the ultimate access node, and finishes the configuration and/or updating of the configuration parameter, wherein the configuration parameter is a special parameter of the ultimate access node related to the superior access node. The invention also discloses a node parameter configuring system. Through the invention, the configuration and updating of the configuration parameter of the ultimate access node (related to the superior access node) are realized, and the problems that some parameters of the ultimate access node can not be configured, the configuration is not accurate, the parameters can not be updated in time and the like are solved, thus the normal operation of the access node in an access network system is ensured; and moreover, the wireless resource conflict between the ultimate access node and the superior access node is avoided, and the wireless resource of the ultimate access node can be configured in a better mode.

Document XP051126685 (Control Plane and Connectivity Principles for NR) relates to an update to R2-164160 that further discusses control plane and connectivity principles for NR. Further, the document specifically proposes a NR control plane with two groups of control functions, distributed edge control functions and centralized anchor control functions as described below: edge control functions would be operating in close proximity to the physical layer, thus enabling fast and/or time critical control signaling. Such edge control functions could be associated with a single MAC instance. Edge control functions would include radio resource configuration, scheduling and rate control, link supervision, beam control (including beam level mobility) etc. Control signaling related to edge control functions would preferably be transported over enhanced MAC Control elements or MAC control PDUs. An anchor control function could then control one or more cells (or TRPs, DUs. RRC state of a UE should be associated to the status of UE context;The UE could be connected to and/or maintain context for multiple instances of edge control. Each instance of edge control would then be associated with the same UE context in a single anchor control instance. The UE would then have a single RRC instance and a single state associated with that anchor control instance, while being possibly simultaneously connected to one or more access instances (e.g. each associated to one UE MAC instance).

Document US 20150257147A1 discloses an inter-network collaboration method, a collaboration node, and a network side device. The method includes: obtaining status information of cells of different standards, where the status information indicates at least one of a radio resource status, terminal distribution, and a service condition of the cells of the different standards; and sending, according to the status information, coordination indication information to base stations or base station controllers of the cells of the different standards, so that the base stations or the base station controllers perform an inter-network collaboration operation according to the coordination indication information.

### SUMMARY

Embodiments of the present invention provide a base station supporting distributed multiple scenes, communication method thereof and storage medium according to the independent claims.

The invention is set out in the appended set of claims.

The present invention provides a base station supporting distributed multiple scenes, communication method thereof and storage medium. The communication method includes: a second communication node broadcasts first information, where the first information is at least used for notifying a terminal of a scene type of the second communication node and information required for the terminal to access the second communication node; the second communication node receives and detects access information transmitted by the terminal, and determines a scene type of the terminal according to the access information; in response to determining that the scene type of the terminal is identical to the scene type of the second communication node and that a third communication node does not need to be established, the second communication node transmits data transmitted by the terminal to a core network via a first communication node on an upper layer of the second communication node; otherwise, the second communication node notifies the third communication node under the second communication node to establish a user equipment (UE) instance corresponding to the scene type of the terminal, until a data radio bearer (DRB) signaling interaction between the UE instance and the terminal is completed. The embodiments of the present invention can satisfy applications in different scenes (systems), and configuration information of related nodes can be preset in the OMC to complete deployment of the base station; the access information of the terminal is determined to make sure whether a UE instance needs to be established, if so (different from the scene type of the second communication node), only configuration of the UE instance is required, and no new version of the base station needs to be added, so that the development, deployment and operation and maintenance costs of the base station can be reduced.

In addition, the embodiments of the present invention further allocate resources among different second communication nodes based on determination of the idle ratio in the UE instance list, so that the tide problem can be solved, resources among nodes can be reasonably allocated, so that the waste of resources can also be reduced.

### BRIEF DESCRIPTION OF DRAWINGS

FIG. 1 is a schematic diagram of 5G multiple scenes coverage based on 4G architecture in the existing art;
FIG. 2 is a schematic diagram of 5G multiple scenes coverage based on a base station according to an embodiment of the present invention;
FIG. 3 is a schematic diagram of function segmentation of a base station according to an embodiment of the present invention;
FIG. 4 is a schematic diagram of a data organization configured by a base station according to an embodiment of the present invention;
FIG. 5 is a schematic diagram of a creation process of a base station according to embodiment 1 of the present invention;
FIG. 6 is a schematic diagram of an access process of a scene with no UE instance established according to embodiment 2 of the present invention;
FIG. 7 is a schematic diagram of an access process of a scene with an UE instance established according to embodiment 3 of the present invention;
FIG. 8 is a schematic diagram of a switch process within a control node according to embodiment 4 of the present invention;
FIG. 9 is a schematic diagram of a process to address a tide according to embodiment 5 of the present invention;
FIG. 10 is a flow chart of a creation method of a base station supporting distributed multiple scenes according to an embodiment of the present invention.
FIG. 11 is a flow chart of a communication method of a base station supporting distributed multiple scenes according to an embodiment of the present invention.
FIG. 12 is a structural diagram of a base station supporting distributed multiple scenes according to an embodiment of the present invention;
FIG. 13 is a structural diagram of a second communication node according to an embodiment of the present invention;
FIG. 14 is a structural diagram of a data transmission module according to an embodiment of the present invention; and
FIG. 15 is a structural diagram of a third communication node according to an embodiment of the present invention.

### DETAILED DESCRIPTION

The present invention will be described in detail below with reference to the accompanying drawings and embodiments.

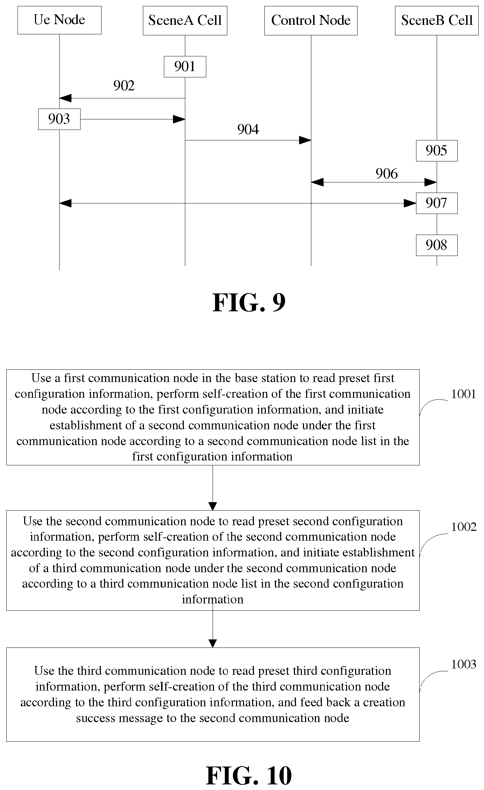

The present invention provides a creation method of a base station supporting distributed multiple scenes. As shown in FIG. 10, the method includes steps described below.

In step 1001, a first communication node in the base station reads preset first configuration information, performs self-creation of the first communication node according to the first configuration information, and initiates establishment of a second communication node under the first communication node according to a second communication node list in the first configuration information.

In step 1002, the second communication node reads preset second configuration information, performs self-creation of the second communication node according to the second configuration information, and initiates establishment of a third communication node under the second communication node according to a third communication node list in the second configuration information.

In step 1003, the third communication node reads preset third configuration information, performs self-creation of the third communication node according to the third configuration information, and feeds back a creation success message to the second communication node.

The step in which the first communication node reads the preset first configuration information and performs the self-creation of the first communication node according to the first configuration information includes steps described below.

The first communication node reads a configured second communication node list, a neighborhood relationship list of a local first communication node and core network list information from an operation and maintenance center (OMC), completes a chain building with a core network according to the core network list information, and initializes an idle resource list of the third communication node.

The step in which the second communication node reads the preset second configuration information and performs the self-creation of the second communication node according to the second configuration information includes steps described below.

The second communication node reads a configured scene type of the second communication node, a broadcast parameter of the second communication node and a third communication node list under the second communication node from the OMC, initializes a user equipment (UE) instance list and a number of UE instances, and acquires a neighborhood relationship list of the second communication node from the first communication node.

The step in which the third communication node reads the preset third configuration information and performs the self-creation of the third communication node according to the third configuration information includes steps described below.

The third communication node reads a configured signaling process template from the OMC or a signaling process template imported through the OMC, performs initialization of a signaling process control; reads control plane information, user plane information and baseband scheduling information, performs initialization of resources corresponding to the control plane information, the user plane information and the baseband scheduling information; reads a measurement parameter, performs initialization of a resource, and initializes a data area for storing a terminal parameter.

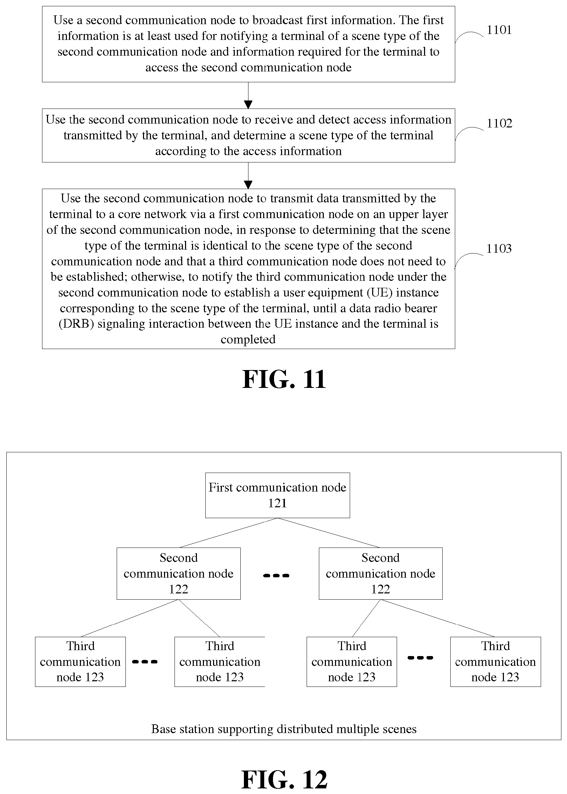

FIG. 11 is a flow chart of implementing a communication method of a base station supporting distributed multiple scenes according to an embodiment of the present invention. The method includes steps described below.

In step 1101, a second communication node broadcasts first information. The first information is at least used for notifying a terminal of a scene type of the second communication node and information required for the terminal to access the second communication node.

In step 1102, the second communication node receives and detects access information transmitted by the terminal, and determines a scene type of the terminal according to the access information.

In step 1103, the second communication node transmits data transmitted by the terminal to a core network via a first communication node on an upper layer of the second communication node, in response to determining that the scene type of the terminal is identical to the scene type of the second communication node and that a third communication node does not need to be established; otherwise, the second communication node notifies the third communication node under the second communication node to establish a user equipment (UE) instance corresponding to the scene type of the terminal, until a data radio bearer (DRB) signaling interaction between the UE instance and the terminal is completed.

After the third communication node establishes the UE instance corresponding to the scene type of the terminal until the DRB signaling interaction between the UE instance and the terminal is completed, the second communication node further transmits the data transmitted by the terminal to the core network via a first communication node on an upper layer of the second communication node. Here, the access information may at least include information such as the scene type of the terminal and an identifier of the terminal, and may further include the data transmitted by the terminal.

Here, the scene type may include information such as the second communication node ID, the third communication node list under the second communication node. Configuration information in the OMC may be created in advance. For example, parameter configuration of the first communication node is created and mainly includes global information such as a first communication node ID, a public land mobile network (PLMN); parameters of the second communication node are configured and include information such as the scene type, the second communication node ID and the third communication node list under the second communication node; parameters of the third communication node are configured and include a scene type, a third communication node ID and a process control template under this scene (which may be completed through importing a template file); core network information is configured and includes a parameter such as a scene type, an ID and an IP; and a neighborhood relationship of the first communication node is configured and includes information such as an ID and an IP.

A process of a terminal using a specific air interface structure and a corresponding signaling process to complete a specific service is called a scene, which is the scene in this invention. It should be noted that as long as one condition in the air interface structure or the signaling process is different, the scene is different.

The embodiments of the present invention can satisfy applications in different scenes (systems), and the configuration information of related nodes can be preset in the OMC to complete deployment of the base station; the access information of the terminal is determined to make sure whether a UE instance needs to be established, if so (different from the scene type of the second communication node), only configuration of the UE instance is required, and no new version of the base station needs to be added, so that the development, deployment, operation and maintenance costs of the base station can be reduced.

In an embodiment, the step in which the second communication node transmits the data transmitted by the terminal to the core network via the first communication node on the upper layer of the second communication node includes steps described below.

The second communication node analyzes the access information to obtain an identifier of the terminal and the data transmitted by the terminal, and adds the identifier of the terminal and the data to a data packet, where the data packet at least carries the scene type and ID information of the second communication node; and
the second communication node transmits the data packet to the first communication node, and transmits the data packet to the core network via the first communication node.

In an embodiment, the step in which the third communication node establishes the UE instance corresponding to the scene type of the terminal until the DRB signaling interaction between the UE instance and the terminal is completed includes steps described below.

The third communication node establishes the UE instance corresponding to the scene type of the terminal, allocates a signaling radio bearer (SRB) resource corresponding to the UE instance; and the third communication node completes a SRB signaling interaction with the terminal and a process of initialization of UE instance context with the core network through the first communication node; and
after the third communication node and the terminal complete a process of inquiry of UE capability and a process of security configuration, the third communication node completes a process of allocation of the DRB resource and a process of filling an initial measurement parameter.

In an embodiment, when the terminal switches between different scenes, the method further includes steps described below.

A second source communication node forwards a switch request transmitted by a third source communication node to a second target communication node;
the second target communication node updates a UE instance list, and notifies a third target communication node to create a UE instance based on the UE instance list, the UE instance performs a reconfiguration process with the terminal; and
the second source communication node receives a switch complete message transmitted by the third target communication node, and notifies the third source communication node to release a successfully switched UE instance and update the UE instance list.

In an embodiment, the step in which the second source communication node receives the switch complete message transmitted by the third target communication node includes steps described below.

After the UE instance completes the reconfiguration process with the terminal, the second source communication node receives the switch complete message. The switch complete message is transmitted by the third target communication node under the second target communication node and is forwarded via the second target communication node and the first communication node.

In an embodiment, when multiple terminals simultaneously switch from a scene A to a scene B in a same time period, the scene A corresponding to a second communication node A and the scene B corresponding to a second communication node B, the method further includes steps described below.

When the second communication node A determines that an idle ratio in the UE instance list is greater than or equal to a first set value, the second communication node A instructs a third communication node under the second communication node A to release a resource corresponding to an idle UE instance and instructs the first communication node to update an idle resource list of the third communication node; and
when the second communication node B determines that the idle ratio in the UE instance list is less than a second set value, the second communication node B requests a resource for the third communication node from the first communication node and requests a third communication node under the second communication node B to create a UE instance corresponding to the scene B for subsequent access of the terminal of a scene B type.

The step in which the second communication node A instructs the third communication node under the second communication node A to release the resource corresponding to the idle UE instance and instructs the first communication node to update the idle resource list of the third communication node includes steps described below.

The second communication node A deletes the idle UE instance in the UE instance list, transmits a request for releasing the resource corresponding to the idle UE instance to the third communication node under the second communication node A based on the UE instance list with the idle UE instance deleted to instruct the third communication node to release the resource corresponding to the idle UE instance, and receives a resource release success message from the third communication node; and
the second communication node A transmits a request for updating an idle resource of the third communication node to the first communication node to instruct the first communication node to update the idle resource list of the third communication node.

The step in which the second communication node B requests the resource for the third communication node from the first communication node and requests the third communication node under the second communication node B to create the UE instance corresponding to the scene B includes steps described below.

The second communication node B requests the resource for the third communication node from the first communication node, and when a resource released by the third communication node under the second communication node A is acquired, transmits a request for creation of the UE instance corresponding to the scene B to the third communication node under the second communication node B according to information of the acquired resource of the third communication node; and
after the second communication node B receives a creation success message of the UE instance corresponding to the scene B from the third communication node, the second communication node B adds the UE instance corresponding to the scene B in the UE instance list and performs initialization.

It can be seen that the embodiments of the present invention can further allocate resources among different second communication nodes based on determination of the idle ratio in the UE instance list, so that the tide problem can be solved, resources among nodes can be reasonably allocated, and the waste of resources can also be reduced.

The embodiments of the present invention further provide a storage medium. Optionally, in this embodiment, the above storage medium may be configured to store program codes for implementing various steps described above.

Optionally, in this embodiment, the above storage medium may include, but is not limited to, a flash disk, a read-only memory (ROM), a random access memory (RAM), a removable hard disk, a magnetic disk, an optical disk, or other media that can store program codes.

The embodiments of the present invention further provide a base station supporting distributed multiple scenes, which is configured to implement the embodiments described above. What have been described will not be repeated here. As used below, terms of "module" and "unit" may be used for implementing a combination of software and/or hardware with predetermined functions. As shown in FIG. 12, the base station includes a first communication node 121, a second communication node 122 and a third communication node 123 under the second communication node.

The first communication node 121 is configured to transmit data to a core network. The data is transmitted by a terminal and forwarded by the second communication node.

The second communication node 122 is configured to broadcast first information. The first information is at least used for notifying the terminal of a scene type of the second communication node and information required for the terminal to access the second communication node.

The second communication node 122 is further configured to receive and detect access information transmitted by the terminal, determine a scene type of the terminal according to the access information, and in response to determining that the scene type of the terminal is identical to the scene type of the second communication node and that the third communication node does not need to be established, transmit the data transmitted by the terminal to the first communication node; otherwise, notify the third communication node under the second communication node to establish a user equipment (UE) instance.

The third communication node 123 is configured to establish the UE instance corresponding to the scene type of the terminal upon reception of notification from the second communication node, until a data radio bearer (DRB) signaling interaction between the UE instance and the terminal is completed.

Different second communication nodes correspond to different scenes to connect terminals in different scenes; the different scenes correspond to different air interface structures.

Here, the scene type may include information such as the second communication node ID, the third communication node list under the second communication node. Configuration information in the OMC may be created in advance. For example, parameter configuration of the first communication node is created and mainly includes global information such as a first communication node ID, a public land mobile network (PLMN); parameters of the second communication node are configured and include information such as the scene type, the second communication node ID, and the third communication node list under the second communication node; parameters of the third communication node are configured and include a scene type, a third communication node ID and a process control template under this scene (which may be completed by importing a template file); core network information is configured and includes a parameter such as a scene type, an ID, and an IP; and a neighborhood relationship of the first communication node is configured and includes information such as an ID, and an IP.

A process of a terminal using a specific air interface structure and a corresponding signaling process to complete a specific service is called a scene, which is the scene in this invention. It should be noted that as long as one condition in the air interface structure or signaling process is different, the scene is different.

The embodiments of the present invention can satisfy applications in different scenes (systems), and configuration information of related nodes can be preset in the OMC to complete deployment of the base station; the access information of the terminal is determined to make sure whether a UE instance needs to be established, if so (different from the scene type of the second communication node), only configuration of the UE instance is required, and no new version of the base station needs to be added, so that the development, deployment and operation and maintenance costs of the base station can be reduced.

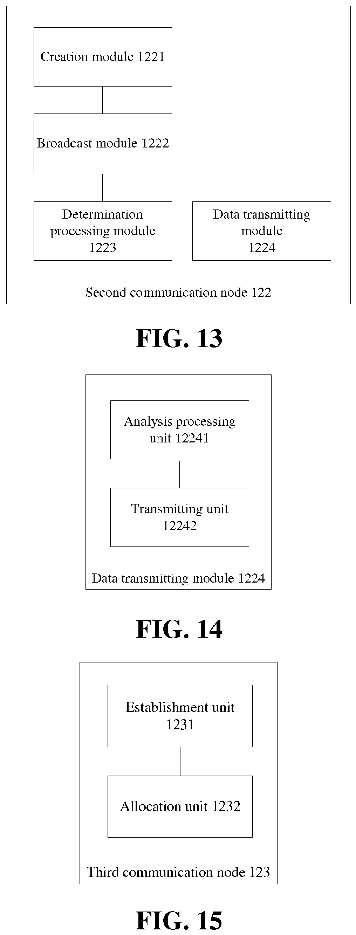

In an embodiment, as shown in FIG. 13, the second communication node 122 includes a creation module 1221, a broadcast module 1222, a determination processing module 1223 and a data transmitting module 1224.

The creation module 1221 is configured to perform self-creation based on preset second configuration information and initiate establishment of the third communication node.

The broadcast module 1222 is configured to broadcast the first information, where the first information is at least used for notifying the terminal of the scene type of the second communication node and the information required for the terminal to access the second communication node.

The determination processing module 1223 is configured to receive and detect the access information transmitted by the terminal, determine the scene type of the terminal according to the access information, in response to determining that the scene type of the terminal is identical to a scene type of the second communication, trigger the data transmitting module; otherwise, notify the third communication node under the second communication node to establish the user equipment (UE) instance.

The data transmitting module 1224 is configured to, when triggered by the determination processing module, transmit the data transmitted by the terminal to the first communication node.

In an embodiment, as shown in FIG. 14, the data transmitting module 1224 includes an analysis processing unit 12241 and a transmitting unit 12242.

The analysis processing unit 12241 is configured to analyze the access information to obtain an identifier of the terminal and the data transmitted by the terminal, and add the identifier of the terminal and the data to a data packet. The data packet at least carries the scene type and ID information of the second communication node.

The transmitting unit 12242 is configured to transmit the data packet to the first communication node.

Optionally, as shown in FIG. 15, the third communication node 123 includes an establishment unit 1231 and an allocation unit 1232.

The establishment unit 1231 is configured to establish the UE instance corresponding to the scene type of the terminal and allocate a signaling radio bearer (SRB) resource (such as a channel resource and a bearer resource) corresponding to the UE instance; complete a SRB signaling interaction with the terminal, and complete a process of initialization of UE instance context with the core network through the first communication node.

The allocation unit 1232 is configured to complete a process of allocation of the DRB resource and a process of filling an initial measurement parameter, after the third communication node and the terminal in a new scene complete a process of inquiry of UE capability and a process of security configuration.

Optionally, in an embodiment, when the terminal switches between different scenes,
the second communication node 122 is further configured to forward a switch request transmitted by a third communication node at a local end to a second communication node at an opposite end; receive a switch complete message transmitted by a third communication node at the opposite end, notify the third communication node at the local end to release a successfully switched UE instance and update a UE instance list; and
the second communication node 122 is further configured to update the UE instance list and notify the third communication node at the local end to create a UE instance based on the UE instance list.

The second communication node 122 receives the switch complete message transmitted by the third target communication node includes steps described below.

After the UE instance completes the reconfiguration process with the terminal, the second communication node 122 receives the switch complete message. The switch complete message is transmitted by the third communication node under the second target communication node at the opposite end and is forwarded via the second communication node at the opposite end and the first communication node.

In an embodiment, when multiple terminals simultaneously switch from a scene A to a scene B in a same time period,
the second communication node 122 is further configured to, in response to determining that an idle ratio in the UE instance list is greater than or equal to a first set value, instruct a third communication node at the local end to release a resource corresponding to an idle UE instance and instruct the first communication node to update an idle resource list of the third communication node; and
the second communication node 122 is further configured to, in response to determining that the idle ratio in the UE instance list is less than a second set value, request a resource for the third communication node from the first communication node, and request the third communication node at the local end to create a UE instance corresponding to the scene B for subsequent access of the terminal of a scene B type.

When the second communication node 122 is used to instruct the third communication node at the local end to release the resource corresponding to the idle UE instance and instruct the first communication node to update the idle resource list of the third communication node,
the second communication node 122 is configured to delete the idle UE instance in the UE instance list, transmit a request for releasing the resource corresponding to the idle UE instance to the third communication node under the second communication node 122 based on the UE instance list with the idle UE instance deleted to instruct the third communication node to release the resource corresponding to the idle UE instance, and receive a resource release success message from the third communication node; and
the second communication node 122 is configured to transmit a request for updating an idle resource of the third communication node to the first communication node to instruct the first communication node to update the idle resource list of the third communication node.

When the second communication node 122 requests the resource for the third communication node from the first communication node and then requests the third communication node at the local end to create the UE instance corresponding to the scene B,
the second communication node 122 is configured to request the resource for the third communication node from the first communication node, and when a resource released by the third communication node under the second communication node at the opposite end is acquired, transmit a request for creation of the UE instance corresponding to the scene B to the third communication node under the second communication node at the local end according to information of the acquired resource of the third communication node; and
the second communication node 122 is configured to add the UE instance corresponding to the scene B in the UE instance list and perform initialization, after a creation success message of the UE instance corresponding to the scene B is received from the third communication node.

It can be seen that the embodiments of the present invention can further allocate resources among different second communication nodes based on the determination of the idle ratio in the UE instance list, so that the tide problem can be solved, the resources among nodes can be reasonably allocated, thus the waste of resources can be reduced.

Based on a platform-as-a-service (PAAS), a scene diagram of a base station supporting distributed multiple scenes is provided below. As shown in FIG. 2, the scene diagram includes a control node (i.e., the above-mentioned first communication node), a cell node (i.e., the above-mentioned second communication node), a UE node (i.e., the above-mentioned third communication node), and a corresponding 5G OMC and 5G core network.

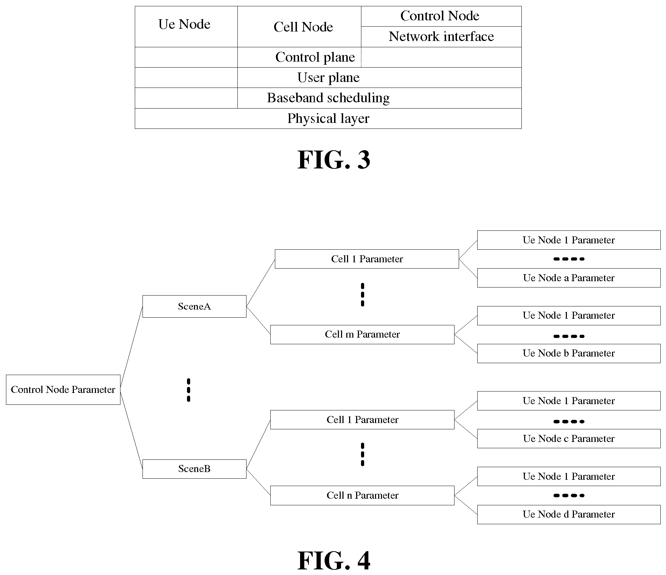

The control node, the cell node and the UE node are components of the base station. In a 4G base station, services are divides into a user plane, a control plane and a baseband, and are processed according to layers in the 4G base station. On this basis, this embodiment divides the services vertically. That is, the UE node includes resource allocation and management functions of the user plane, the control plane and the baseband scheduling; the cell node is responsible for other functions of the user plane, the control plane and the baseband except the functions included in the UE node; and the control node is responsible for network interface management and some functions of the control plane, as shown in FIG. 3.

To facilitate understanding, some concepts are set up first.

A scene is a process of a terminal using a specific air interface structure and a corresponding signaling process to complete a specific service. As long as one condition in the air interface structure or the signaling process is different, the corresponding scene is different.

A cell node is a cell established for implementing a processing flow of a specific air interface structure.

A UE node is a function body established for implementing a specific signaling process.

A scene terminal is user equipment supporting one or more air interface structures and corresponding signaling processes.

5G OMC, also called OMC, is a network management operating system for implementing configuration and management of a 5G base station.

5G core network, also called core network, is core network equipment connected to the 5G base station and responsible for processing 5G services, i.e., processing services according to scenes.

Brief descriptions of the above components are described as follows.

5G OMC: 5G OMC is mainly responsible for management and maintenance of a 5G base station. The function of parameter configuration mainly includes:
1) creation of configuration of the control node is created, which mainly includes global information, such as a control node ID, a PLMN;
2) configuration of parameters of a scene cell, including information, such as a scene type, a scene cell ID, a scene UE list under the scene cell;
3) configuration of parameters of a scene UE, including a scene type, a scene UE ID, and a process control template under this scene (which may be completed through importing a template file);
4) configuration of core network information, including parameters, such as a scene type, ID, an IP; and
5) configuration of neighborhood relationship of the control node, including information, such as an ID, an IP.

Control node: Compared with an eNB under 4G, the control node no longer processes a signaling process, and transfers a resource management function to a cell. Now the control node is only responsible for management of a cell in multiple scenes and interactions with the core network and associated control nodes. Main functions of the control node include:
1) initiation of establishment of each scene cell according to scene information configured by the OMC;
2) maintenance of global resource list of a cell under the control node, including situation of each scene cell and scene UE nodes under each scene cell, and resource information used by each scene cell and the scene UE nodes;
3) acquisition of configuration information of the core network from the OMC, and maintenance of a core network list;
4) acquisition of neighborhood list of the control node from the OMC, storage and maintenance of the neighborhood list of the control node, communication between control nodes to support mobility related functions; and
5) allocation of UE ID under this control node (the UE ID is unique under the control node at this point, this function is optional).

Cell node: A cell node is an independent functional body implementing a stripped air interface structure processing flow. The type of the air interface structure is only a cell level attribute, and one air interface structure corresponds to one type cell. Main functions of the cell node include:
1) establishment and maintenance of a specific scene cell according to requirements of the control node, and configuration of a specific scene parameter through the OMC;
2) broadcasting of information and a paging message related to the scene;
3) resource allocation and management at cell level, new construction; creation, modification and deletion of UE node instances of all scenes in the cell; and maintenance of an instance list under this cell;
4) acquisition of a neighborhood relationship from the control node and maintenance of a neighborhood list;
5) initiation of creation of a UE node according to the UE node list of the cell configured by the OMC;
6) handling of the tide problem of users: when the scene cell has a low load, a UE node resource will be released and the control node is notified to update idle resource information; when the scene cell needs to acquire a new resource, an idle resource is acquired from the control node, i.e., supporting flexibility.
7) allocation of UE ID (at this time, the UE ID is combined information, including scene information, a cell ID and a sequence number of this cell for building instance, this funtion is optional) (an alternative to the function 5 of the control node).

UE node: In consideration of that traditional scheduling method is far from satisfying demands, in order to solve a scene with massive connections in the era of 5G, a grant-free technology will be applied. In other words, it is possible that in some scenes, no UE instance is established for signaling processing flow, and the signaling processing flow corresponding to each air interface structure processing will be stripped and separated into a functional body (namely, UE node), and UEs with a same air interface structure will be processed using a same UE node. The access of multiple user terminal equipment with different air interface structures will be processed through respective UE nodes. When a UE of a new scene accesses, only the cell node and the UE node are added to the vision. Main functions of the UE node include:
1) storage of UE related information of a specific user terminal;
2) implementation of a signaling process according to an OMC process configuration template, the signaling process including a related flow processing, such as a measurement process, a measurement report processing, mobility; and
3) resource allocation and management at UE level, which includes configuration and management of a resource parameter, such as the control plane, the user plane and the baseband scheduling.

5G core network: The 5G core network may satisfy service requirements under different 5G scenes.

The present invention will be described with several scene embodiments as examples based on the structure shown in FIG. 2.

### Embodiment 1 (A creation process of a 5G base station)

In order to better adapt to the new architecture, base station data is reorganized and divided, and the data is organized according to layers. As shown in FIG. 4, a Control Node Parameter stores data related to the control node, and SceneX is a label used for indicating that all data under that label is related to SceneX; under the SceneX is a cell node list, in which a Cell x Parameter stores configuration data related to the cell; and under the cell node is a UE node list, in which a UE Node x Parameter stores configuration data related to the UE node.

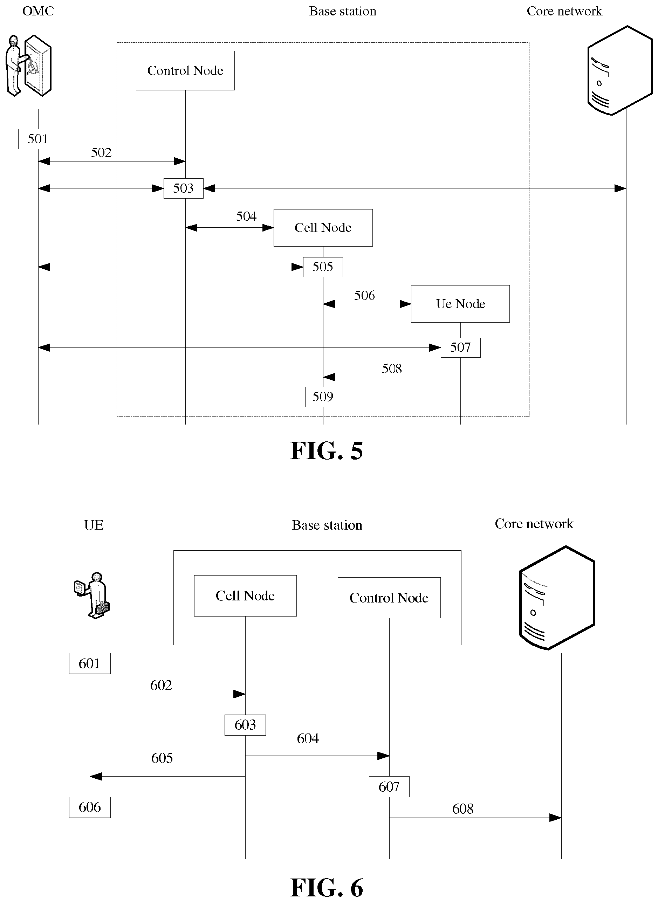

This embodiment will be described with reference to FIG. 5. The specific flow is as follows.

In step 501 of FIG. 5, a control node is created on the OMC, parameters such as ID and PLMN are configured, a cell node and a UE node under the control node and parameters corresponding to the cell node and the UE node are configured.

In step 502 of FIG. 5, the OMC activates the parameters and initiates creation of a control node.

In step 503 of FIG. 5, self-creation of the control node is performed. Specifically, a scene cell list configured by the OMC, a neighborhood relationship list of the control node and core network list information are read, a chain building with the core network is completed according to the core network list information, and an idle resource list of the UE node is initialized.

In step 504 of FIG. 5, the control node notifies the PAAS platform according to the scene cell list to initiate creation of a cell node.

In step 505 of FIG. 5, self-creation of the cell node is performed. Specifically, OMC configuration information is read, including parameter information, such as a scene type, a broadcast parameter, a UE node list under this cell; the UE instance list and the number of UE instances are initialized, and a neighborhood relationship list (including cell nodes in this control node and cell nodes between different control nodes) is obtained from the control node.

In step 506 of FIG. 5, the cell node notifies the PAAS platform according to the UE node list to initiate creation of a UE node, and sets a timeout timer.

In step 507 of FIG. 5, self-creation of the UE node is performed. Specifically, a signaling process template configured or imported by the OMC is read, a signaling process control is initialized; parameters of control plane, user plane and baseband scheduling are read, of resources corresponding to the control plane, the user plane and the baseband scheduling are initialized; a measurement parameter is read, a resource is initialized; and a data area for storing a terminal parameter is initialized.

In step 508 of FIG. 5, the UE node feeds back a creation success message to the cell node.

In step 509 of FIG. 5, when the cell node receives creation success messages of all UE nodes or when the timer expires and at least one creation success message is received, information of this cell is broadcasted.

### Embodiment 2 (An access process without establishment of UE instance)

Each 5G scene cell has a same coverage. Terminal equipment in this scene generally corresponds to a static terminal of Internet of Things. Such terminal will send data while accessing, and generally only one packet is uploaded at a time. That is, access and data transmission are completed together.

This embodiment will be described with reference to FIG. 6. The specific flow is as follows.

In step 601 of FIG. 6, a scene terminal analyzes broadcast information of the cell node to obtain channel information.

In step 602 of FIG. 6, when the scene terminal has data to be transmitted, an access process is initiated and the data to be transmitted is added to an air interface initial message (NAS PDU) of a third layer, and a timer is set to wait for confirmation information.

In step 603 of FIG. 6, when access of a scene terminal is detected by the cell node, an identifier of the scene terminal and the data are analyzed, and an identifier of the scene terminal and data analyzed in a same time period are packaged with information, such as a scene type and a cell ID.

In step 604 of FIG. 6, the cell node transmits the data packaged in the step 603 to the control node.

In step 605 of FIG. 6, the cell node broadcasts the identifiers of the scene terminal analyzed in the same time period to confirm data receiving information.

In step 606 of FIG. 6, when the scene terminal receives confirmation information of the cell node in the step 605 before the timer set in the step 602 expires, the timer set in the step 602 is canceled; otherwise, the step 602 is executed, and the timer is reset according to the broadcast information.

In step 607 of FIG. 6, after the control node receives the data transmitted by the cell node in the step 604, the control node packages data received in a same scene at a same time period and selects a route.

In step 608 of FIG. 6, the control node transmits the packaged data in the step 607 to a corresponding core network, and the access process ends.

### Embodiment 3 (An access process with establishment of a UE instance)

Each 5G scene cell has a same coverage. Terminal equipment of this scene is basically as same as a 4G terminal, which requires establishment of SRB and DRB and performs data transmission on the DRB.

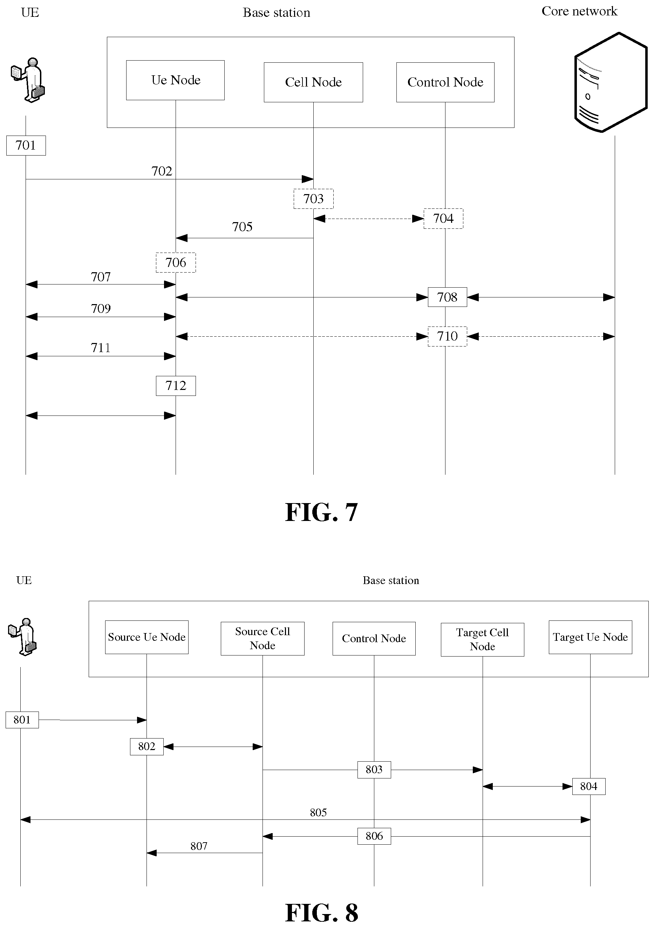

This embodiment will be described with reference to FIG. 7. The specific flow is as follows.

Step 701 of FIG. 7 is similar to the step 601.

Step 702 of FIG. 7 is similar to the step 602, but the scene terminal does not carry data in the access information.

In step 703 of FIG. 7, the cell node detects access of the scene terminal and allocates a UE instance. In an optional or alternative step 704, a UE ID is allocated and a UE instance list is updated.

In step 704 of FIG. 7, the cell node applies for a UE ID from the control node, the control node completes allocation of the UE ID and feeds back a result of the allocation to the cell node, the cell node updates the UE instance list. The step 704 is an alternative to the step 703 in which the cell node detects access of the scene terminal and allocates a UE instance.

In step 705 of FIG. 7, the cell node transmits the UE ID to the UE node to create a UE instance.

In step 706 of FIG. 7, the UE node establishes the UE instance and allocates a corresponding SRB-related resource.

In step 707 of FIG. 7, the UE node and the scene terminal complete a SRB signaling interaction.

In step 708 of FIG. 7, the UE node completes a context initialization process of UE instance with the core network through the control node.

In step 709 of FIG. 7, the UE node and the scene terminal complete a process of inquiry of UE capability.

In step 710 of FIG.7, the UE node completes a process of reporting the UE capability to the core network through the control node, which is optional.

In step 711 of FIG. 7, the UE node and the scene terminal complete a process of security configuration.

In step 712 of FIG. 7, the UE node completes processes including allocation of a DRB resource, a process of filling an initial measurement parameter, etc.

In step 713 of FIG.7, the UE node and the scene terminal complete a DRB signaling interaction, and this access process ends.

### Embodiment 4 (A switch process within a control node)

This embodiment will be described with reference to FIG. 8. The specific flow is as follows.

In step 801 of FIG. 8, the scene terminal performs measurement according to a measurement parameter and reports a measurement result to a UE instance.

In step 802 of FIG. 8, the UE node obtains a neighborhood relationship list from the cell node, and determines whether a switch within the control node is required according to the measurement result; if so, a switch process is initiated and a message is transmitted to the cell node.

In step 803 of FIG. 8, the cell node forwards a switch request to a target cell node via the control node.

In step 804 of FIG. 8, the target cell node allocates a new UE instance, updates a UE instance list, and notifies the UE node under the target cell node to create a UE instance.

In step 805 of FIG. 8, the UE instance on the target side completes a reconfiguration process with the scene equipment.

In step 806 of FIG. 8, a new UE instance forwards a switch complete message to the cell node on the source side via the cell node and the control node.

In step 807 of FIG. 8, the cell node on the source side notifies the UE node to release a successfully switched UE instance, and updates the UE instance list to complete this switch process.

The switch process between control nodes requires communication between the control nodes or forwarding through the core network.

### Embodiment 5 (A process for addressing tide)

This area covers by two scene cells (a scene A cell and a scene B cell) here, and terminals in this area include following characteristics: basically an A type scene terminal during daytime and a B type scene terminal during nighttime.

This embodiment will be described with reference to FIG. 9. The specific flow is as follows.

In step 901 of FIG. 9, the scene A cell checks an idle ratio in a UE instance list to determine whether it reaches a set value.

In step 902 of FIG. 9, the scene A cell deletes an idle instance in the instance list and transmits a request for a resource corresponding to the idle instance to the UE node.

In step 903 of FIG. 9, the UE node releases the corresponding resource and feeds back a success message to the scene A cell.

In step 904 of FIG. 9, the scene A cell updates an idle resource request of the UE node to the control node, and the control node updates the idle resource list of the UE node.

In step 905 of FIG. 9, the scene B cell checks the idle ratio in the UE instance list to determine whether it is less than the set value.

In step 906 of FIG. 9, the scene B cell requests a resource for the UE node from the control node, the control node checks the idle resource list of the UE Node to determine whether it has an idle resource and feeds back a result to the scene B cell.

In step 907 of FIG. 9, the scene B cell determines an acquired resource; if no resource is acquired, the step 905 is executed; otherwise, a request of creating a UE instance of a scene B type is transmitted to the UE node, and after the creation of the UE instance of the scene B type is completed, a success message is fed back to the scene B cell.

In step 908 of FIG. 9, the scene B cell adds a corresponding instance in the UE instance list and initializes the instance. This instance may be used for subsequent access of user equipment of the scene B type.

Those skilled in the art will appreciate that the embodiments of the present invention may be provided as a method, a system, or a computer program product. Therefore, the present invention may take a form of a hardware embodiment, a software embodiment, or an embodiment combining software and hardware aspects. Besides, the present invention may take a form of a computer program product implemented on one or more computer usable storage media (including, but not limited to, a magnetic disk storage, an optical storage, etc.) with computer usable program codes embodied therein.

The present invention is described with reference to the flowcharts and/or block diagrams of the methods, apparatus (systems), and computer program products according to the embodiments of the present invention. It should be understood that each flow and/or block in the flowcharts and/or block diagrams, and combinations of flows and/or blocks in the flowcharts and/or block diagrams, may be implemented by computer program instructions. These computer program instructions may be provided to a processor of a general purpose computer, special purpose computer, embedded processor, or other programmable data processing apparatus to produce a machine, such that the instructions executed by the processor of the computer or other programmable data processing apparatus produce means for implementing the functions specified in a flow or flows in the flowcharts and/or a block or blocks in the block diagrams.

These computer program instructions may also be stored in a computer-readable memory that may direct a computer or other programmable data processing apparatus to function in a particular manner, so that the instructions stored in the computer-readable memory produce an article of manufacture including instruction means that implement the functions specified in a flow or flows in the flowcharts and/or a block or blocks in the block diagrams.

These computer program instructions may also be loaded onto a computer or other programmable data processing apparatus, so that a series of operational steps are performed on the computer or other programmable apparatus to produce a computer implemented process, so that the instructions executed on the computer or other programmable apparatus provide steps for implementing the functions specified in a flow or flows in the flowcharts and/or a block or blocks in the block diagrams.

Based on this, the embodiments of the present invention provides a storage medium, in particular a computer readable storage medium, which may include a first storage unit, a second storage unit, and a third storage unit, the three storage units are respectively arranged at a first communication node, a second communication node, and a third communication node, on which computer programs are stored, and when the computer programs are executed by a processor, steps of methods on first communication node side, steps of methods on the second communication node side, and the steps of method on the third communication node are respectively implemented.

The above description is only preferred embodiments of the present invention and it is not intended to limit the protection scope of the present invention.

## Claims

1. A base station supporting distributed multiple systems, wherein the multiple systems refers to multiple processes of a terminal using respective air interface structures and corresponding signaling processes to complete respective services, wherein
the base station comprises a first communication node (121), a second communication node (122) and a third communication node (123) maintained by the second communication node;
wherein the first communication node (121) is configured to transmit data to a core network, wherein the data is transmitted by a terminal and forwarded by the second communication node (122);
the second communication node (122) is configured to broadcast first information, wherein the first information is at least used for notifying the terminal of a system type of the second communication node (122) and information required for the terminal to access the second communication node (122);
the second communication node (122) is further configured to:
receive and detect access information transmitted by the terminal,
determine a system type of the terminal according to the access information, and
in response to determining that the system type of the terminal is identical to the system type of the second communication node (122), determine that the third communication node (123) does not need to be established, and transmit the data transmitted by the terminal to the first communication node (121); otherwise, notify the third communication node (123) maintained by the second communication node (122) to establish a user equipment, UE, instance context;
the third communication node (123) is configured to, upon reception of notification from the second communication node (122), establish the UE instance context corresponding to the system type of the terminal to complete a data radio bearer, DRB, signaling interaction between the UE instance context and the terminal.

2. The base station according to claim 1, wherein the second communication node (122) comprises:
a creation module, which is configured to perform self-creation of the second communication node based on preset second configuration information and initiate establishment of the third communication node (123);
a broadcast module, which is configured to broadcast the first information, wherein the first information is at least used for notifying the terminal of the system type of the second communication node (122) and the information required for the terminal to access the second communication node (122);
a determination processing module, which is configured to:
receive and detect the access information transmitted by the terminal,
determine the system type of the terminal according to the access information, and
in response to determining that the system type of the terminal is identical to a system type of the second communication, trigger a data transmitting module; otherwise, notify the third communication node (123) maintained by the second communication node (122) to establish the user equipment, UE, instance context; and
the data transmitting module, which is configured to, when triggered by the determination processing module, transmit the data transmitted by the terminal to the first communication node (121),
wherein the data transmitting module comprises:
an analysis processing unit, which is configured to analyze the access information to obtain an identifier of the terminal and the data transmitted by the terminal, and add the identifier of the terminal and the data to a data packet, wherein the data packet at least carries the system type and ID information of the second communication node (122); and
a transmitting unit, which is configured to transmit the data packet to the first communication node (121).

3. The base station according to claim 1, wherein the third communication node (123) comprises:
an establishment unit, which is configured to establish the UE instance context corresponding to the system type of the terminal and allocate a signaling radio bearer, SRB, resource corresponding to the UE instance context; complete a SRB signaling interaction with the terminal, and complete an initialization process of the UE instance context with the core network through the first communication node (121); and
an allocation unit, which is configured to complete a process of allocation of the DRB resource and a process of filling an measurement parameter, after the third communication node (123) and the terminal in a new system complete a process of inquiry of UE capability and a process of security configuration.

4. The base station according to any one of claim 1 to 3, wherein when the terminal switches between different systems,
the second communication node (122) is further configured to forward a switch request transmitted by a third communication node in a current system to a second communication node in a target system; receive a switch complete message transmitted by a third communication node (123) in the target system, notify the third communication node (123) in the current system to release a successfully switched UE instance context and update a UE instance context list; and
the second communication node (122) is further configured to update the UE instance context list and notify the third communication node (123) in the current system to create a UE instance context based on the UE instance context list.

5. The base station according to any one of claim 1 to 3, wherein when a plurality of terminals simultaneously switch from a system A to a system B in a same time period,
the second communication node (122) is further configured to, in response to determining that an idle ratio in the UE instance context list is greater than or equal to a first set value, instruct a third communication node in a current system to release a resource corresponding to an idle UE instance context and instruct the first communication node (121) to update an idle resource list of the third communication node (123); and
the second communication node (122) is further configured to, in response to determining that the idle ratio in the UE instance context list is less than a second set value, request a resource for the third communication node (123) from the first communication node, and request the third communication node (123) in the current system to create a UE instance context corresponding to the system B for subsequent access of the terminal of a system B type.

6. A communication method of a base station supporting distributed multiple systems, wherein the multiple systems refers to multiple processes of a terminal using respective air interface structures and corresponding signaling processes to complete respective services, the base station comprises a first communication node (121), a second communication node (122) and a third communication node (123) maintained by the second communication node, wherein the communication method comprises:
using (1101) a second communication node to broadcast first information, wherein the first information is at least used for notifying a terminal of a system type of the second communication node and information required for the terminal to access the second communication node;
using (1102) the second communication node to receive and detect access information transmitted by the terminal, and determine a system type of the terminal according to the access information; and
using (1103) the second communication node to: in response to determining that the system type of the terminal is identical to the system type of the second communication node, determine that a third communication node does not need to be established, transmit data transmitted by the terminal to a core network via a first communication node to which the second communication node accesses; otherwise, notify the third communication node maintained by the second communication node to establish a user equipment, UE, instance context corresponding to the system type of the terminal to complete a data radio bearer, DRB, signaling interaction between the UE instance context and the terminal.

7. The communication method according to claim 6, wherein using the second communication node to transmit the data transmitted by the terminal to the core network via the first communication node to which the second communication node accesses comprises:
using the second communication node to analyze the access information to obtain an identifier of the terminal and the data transmitted by the terminal, and add the identifier of the terminal and the data to a data packet, wherein the data packet at least carries the system type and ID information of the second communication node; and
using the second communication node to transmit the data packet to the first communication node, and transmit the data packet to the core network via the first communication node.

8. The communication method according to claim 6, wherein using the third communication node to establish the UE instance context corresponding to the system type of the terminal to complete the DRB signaling interaction between the UE instance context and the terminal comprises:
using the third communication node to establish the UE instance context corresponding to the system type of the terminal, allocate a signaling radio bearer, SRB, resource corresponding to the UE instance context, complete a SRB signaling interaction with the terminal and complete an initialization process of the UE instance context with the core network through the first communication node; and
using the third communication node to complete a process of allocation of the DRB resource and a process of filling an measurement parameter, after the third communication node and the terminal complete a process of inquiry of UE capability and a process of security configuration.

9. The communication method according to any one of claim 6 to 8, wherein when the terminal switches between different systems, the method further comprises:
using a second source communication node to forward a switch request transmitted by a third source communication node to a second target communication node;
using the second target communication node to update a UE instance context list, and notify a third target communication node to create a UE instance context based on the UE instance context list, wherein the UE instance context performs a reconfiguration process with the terminal; and
using the second source communication node to receive a switch complete message transmitted by the third target communication node, and notify the third source communication node to release a successfully switched UE instance context and update the UE instance context list,
wherein using the second source communication node to receive the switch complete message transmitted by the third target communication node comprises:
using the second source communication node to receive the switch complete message, wherein the switch complete message is transmitted by the third target communication node maintained by the second target communication node and is forwarded via the second target communication node and the first communication node.

10. The communication method according to any one of claim 6 to 8, wherein a plurality of terminals simultaneously switch from a system A to a system B in a same time period, when the system A corresponds to a second communication node A and the system B corresponds to a second communication node B, the method further comprises:
when the second communication node A determines that an idle ratio in the UE instance context list is greater than or equal to a first set value, using the second communication node A to instruct a third communication node maintained by the second communication node A to release a resource corresponding to an idle UE instance context and instruct the first communication node to update an idle resource list of the third communication node; and
when the second communication node B determines that the idle ratio in the UE instance context list is less than a second set value, using the second communication node B to request a resource for the third communication node from the first communication node and request a third communication node maintained by the second communication node B to create a UE instance context corresponding to the system B for subsequent access of the terminal of a system B type, wherein using the second communication node A to instruct the third communication node maintained by the second communication node A to release the resource corresponding to the idle UE instance context and instruct the first communication node to update the idle resource list of the third communication node comprises:
using the second communication node A to delete the idle UE instance context in the UE instance context list, transmit a request for releasing the resource corresponding to the idle UE instance context to the third communication node maintained by the second communication node A based on the UE instance context list with the idle UE instance context deleted to instruct the third communication node to release the resource corresponding to the idle UE instance context, and receive a resource release success message from the third communication node; and
using the second communication node A to transmit a request for updating an idle resource of the third communication node to the first communication node to instruct the first communication node to update the idle resource list of the third communication node,
wherein using the second communication node B to request the resource for the third communication node from the first communication node and request the third communication node maintained by the second communication node B to create the UE instance context corresponding to the system B comprises:
using the second communication node B to request the resource for the third communication node from the first communication node, and when a resource released by the third communication node maintained by the second communication node A is acquired, transmit a request for creation of the UE instance context corresponding to the system B to the third communication node maintained by the second communication node B according to information of the acquired resource of the third communication node; and
after the second communication node B receives a creation success message of the UE instance context corresponding to the system B from the third communication node, using the second communication node B to add the UE instance context corresponding to the system B in the UE instance context list and perform initialization.

11. A storage medium, storing computer programs, wherein when the computer programs executed by a processor, implement the method according to any one of claim 1 to 4 or the method according to any of claim 6 to 10.

## Patentansprüche

1. Basisstation, die verteilte Mehrfachsysteme unterstützt, wobei sich die Mehrfachsysteme auf mehrere Prozesse eines Endgeräts beziehen, die jeweilige Luftschnittstellenstrukturen und entsprechende Signalisierungsprozesse verwenden, um jeweilige Dienste zu vervollständigen, wobei die Basisstation
umfasst einen ersten Kommunikationsknoten (121), einen zweiten Kommunikationsknoten (122) und einen dritten Kommunikationsknoten (123), der von dem zweiten Kommunikationsknoten unterhalten wird;
wobei der erste Kommunikationsknoten (121) so konfiguriert ist, dass er Daten an ein Kernnetz überträgt, wobei die Daten von einem Endgerät übertragen und von dem zweiten Kommunikationsknoten (122) weitergeleitet werden;
der zweite Kommunikationsknoten (122) so konfiguriert ist, dass er erste Informationen sendet, wobei die ersten Informationen zumindest dazu verwendet werden, dem Endgerät einen Systemtyp des zweiten Kommunikationsknotens (122) und Informationen mitzuteilen, die das Endgerät für den Zugriff auf den zweiten Kommunikationsknoten (122) benötigt;
der zweite Kommunikationsknoten (122) ist ferner so konfiguriert, dass er:
die vom Endgerät übermittelten Zugangsinformationen empfangen und erkennen,
Bestimmen eines Systemtyps des Endgeräts anhand der Zugriffsinformationen, und
als Reaktion auf die Feststellung, dass der Systemtyp des Endgeräts mit dem Systemtyp des zweiten Kommunikationsknotens (122) identisch ist, festzustellen, dass der dritte Kommunikationsknoten (123) nicht eingerichtet werden muss, und die vom Endgerät übertragenen Daten an den ersten Kommunikationsknoten (121) zu übertragen;
andernfalls den dritten Kommunikationsknoten (123), der vom zweiten Kommunikationsknoten (122) verwaltet wird, zu benachrichtigen, um einen Benutzergeräte-, UE-, Instanzkontext einzurichten;
der dritte Kommunikationsknoten (123) so konfiguriert ist, dass er bei Empfang einer Benachrichtigung von dem zweiten Kommunikationsknoten (122) den UE-Instanzkontext entsprechend dem Systemtyp des Endgeräts einrichtet, um eine Datenfunkträger-Signalisierungsinteraktion DRB zwischen dem UE-Instanzkontext und dem Endgerät abzuschließen.

2. Basisstation nach Anspruch 1, wobei der zweite Kommunikationsknoten (122) umfasst:
ein Erzeugungsmodul, das so konfiguriert ist, dass es die Selbsterzeugung des zweiten Kommunikationsknotens auf der Grundlage von voreingestellten zweiten Konfigurationsinformationen durchführt und die Einrichtung des dritten Kommunikationsknotens (123) einleitet;
ein Rundsendemodul, das zum Rundsenden der ersten Informationen konfiguriert ist, wobei die ersten Informationen zumindest dazu verwendet werden, das Endgerät über den Systemtyp des zweiten Kommunikationsknotens (122) und die für das Endgerät zum Zugriff auf den zweiten Kommunikationsknoten (122) erforderlichen Informationen zu informieren;
ein Bestimmungsverarbeitungsmodul, das so konfiguriert ist, dass es:
die vom Endgerät übermittelten Zugangsinformationen empfangen und erkennen,
den Systemtyp des Endgeräts anhand der Zugangsinformationen zu bestimmen und
als Reaktion auf die Feststellung, dass der Systemtyp des Endgeräts mit einem Systemtyp der zweiten Kommunikation identisch ist, ein Datenübertragungsmodul auslösen; andernfalls den dritten Kommunikationsknoten (123), der von dem zweiten Kommunikationsknoten (122) verwaltet wird, benachrichtigen, um den Kontext der Benutzerausrüstung, UE, herzustellen; und
das Datenübertragungsmodul, das so konfiguriert ist, dass es, wenn es durch das Bestimmungsverarbeitungsmodul ausgelöst wird, die von dem Endgerät übertragenen Daten an den ersten Kommunikationsknoten (121) überträgt,
wobei das Datenübertragungsmodul umfasst:
eine Analyseverarbeitungseinheit, die so konfiguriert ist, dass sie die Zugriffsinformationen analysiert, um eine Kennung des Endgeräts und die von dem Endgerät übertragenen Daten zu erhalten, und die Kennung des Endgeräts und die Daten zu einem Datenpaket hinzufügt, wobei das Datenpaket zumindest den Systemtyp und die ID-Informationen des zweiten Kommunikationsknotens (122) trägt; und
eine Sendeeinheit, die zum Senden des Datenpakets an den ersten Kommunikationsknoten (121) konfiguriert ist.

3. Basisstation nach Anspruch 1, wobei der dritte Kommunikationsknoten (123) umfasst:
eine Einrichtungseinheit, die so konfiguriert ist, dass sie den UE-Instanzkontext entsprechend dem Systemtyp des Endgeräts einrichtet und eine Signalisierungs-Funkträger-Ressource SRB entsprechend dem UE-Instanzkontext zuweist; eine SRB-Signalisierungsinteraktion mit dem Endgerät abschließt und einen Initialisierungsprozess des UE-Instanzkontexts mit dem Kernnetz über den ersten Kommunikationsknoten (121) abschließt; und
eine Zuweisungseinheit, die so konfiguriert ist, dass sie einen Prozess der Zuweisung der DRB-Ressource und einen Prozess des Füllens eines Messparameters abschließt, nachdem der dritte Kommunikationsknoten (123) und das Endgerät in einem neuen System einen Prozess der Abfrage der UE-Fähigkeit und einen Prozess der Sicherheitskonfiguration abgeschlossen haben.

4. Basisstation nach einem der Ansprüche 1 bis 3, wobei beim Umschalten des Endgeräts zwischen verschiedenen Systemen,
der zweite Kommunikationsknoten (122) ferner konfiguriert ist, um eine von einem dritten Kommunikationsknoten in einem aktuellen System übertragene Umschaltanforderung an einen zweiten Kommunikationsknoten in einem Zielsystem weiterzuleiten; eine von einem dritten Kommunikationsknoten (123) in dem Zielsystem übertragene Umschaltvollendungsnachricht zu empfangen, den dritten Kommunikationsknoten (123) in dem aktuellen System zu benachrichtigen, um einen erfolgreich umgeschalteten UE-Instanzkontext freizugeben und eine UE-Instanzkontextliste zu aktualisieren; und
der zweite Kommunikationsknoten (122) weiter konfiguriert ist, um die UE-Instanzkontextliste zu aktualisieren und den dritten Kommunikationsknoten (123) im aktuellen System zu benachrichtigen, um einen UE-Instanzkontext basierend auf der UE-Instanzkontextliste zu erstellen.

5. Basisstation nach einem der Ansprüche 1 bis 3, wobei eine Vielzahl von Endgeräten gleichzeitig von einem System A zu einem System B in derselben Zeitspanne wechseln,
der zweite Kommunikationsknoten (122) ferner so konfiguriert ist, dass er als Reaktion auf die Feststellung, dass ein Leerlaufverhältnis in der UE-Instanzkontextliste größer oder gleich einem ersten eingestellten Wert ist, einen dritten Kommunikationsknoten in einem aktuellen System anweist, eine einem Leerlauf-UE-Instanzkontext entsprechende Ressource freizugeben, und den ersten Kommunikationsknoten (121) anweist, eine Leerlaufressourcenliste des dritten Kommunikationsknotens (123) zu aktualisieren; und
der zweite Kommunikationsknoten (122) ferner so konfiguriert ist, dass er als Reaktion auf die Feststellung, dass das Leerlaufverhältnis in der UE-Instanzkontextliste kleiner als ein zweiter eingestellter Wert ist, eine Ressource für den dritten Kommunikationsknoten (123) von dem ersten Kommunikationsknoten anfordert und den dritten Kommunikationsknoten (123) in dem aktuellen System auffordert, einen UE-Instanzkontext zu erstellen, der dem System B für einen nachfolgenden Zugriff des Endgeräts eines System-B-Typs entspricht.

6. Kommunikationsverfahren einer Basisstation, die verteilte Mehrfachsysteme unterstützt, wobei sich die Mehrfachsysteme auf mehrere Prozesse eines Endgerätes beziehen, die jeweilige Luftschnittstellenstrukturen und entsprechende Signalisierungsprozesse verwenden, um jeweilige Dienste zu vervollständigen, wobei die Basisstation einen ersten Kommunikationsknoten (121), einen zweiten Kommunikationsknoten (122) und einen dritten Kommunikationsknoten (123) umfasst, der von dem zweiten Kommunikationsknoten unterhalten wird, wobei
das Kommunikationsverfahren umfasst:
Verwenden (1101) eines zweiten Kommunikationsknotens, um erste Informationen zu senden, wobei die ersten Informationen zumindest dazu verwendet werden, einem Endgerät einen Systemtyp des zweiten Kommunikationsknotens und Informationen mitzuteilen, die das Endgerät für den Zugriff auf den zweiten Kommunikationsknoten benötigt;
Verwenden (1102) des zweiten Kommunikationsknotens zum Empfangen und Erfassen von Zugriffsinformationen, die von dem Endgerät übertragen werden, und Bestimmen eines Systemtyps des Endgeräts gemäß den Zugriffsinformationen; und
Verwenden (1103) des zweiten Kommunikationsknotens, um: als Reaktion auf das Bestimmen, dass der Systemtyp des Endgeräts mit dem Systemtyp des zweiten Kommunikationsknotens identisch ist, zu bestimmen, dass ein dritter Kommunikationsknoten nicht eingerichtet werden muss, Daten, die von dem Endgerät übertragen werden, über einen ersten Kommunikationsknoten, auf den der zweite Kommunikationsknoten zugreift, an ein Kernnetz zu übertragen; andernfalls den dritten Kommunikationsknoten, der von dem zweiten Kommunikationsknoten verwaltet wird, zu benachrichtigen, um einen Benutzergeräte-, UE-, Instanzkontext einzurichten, der dem Systemtyp des Endgeräts entspricht, um eine Datenfunkträger-, DRB-, Signalisierungsinteraktion zwischen dem UE-Instanzkontext und dem Endgerät abzuschließen.

7. Kommunikationsverfahren nach Anspruch 6, wobei die Verwendung des zweiten Kommunikationsknotens zur Übertragung der vom Endgerät übertragenen Daten an das Kernnetz über den ersten Kommunikationsknoten, auf den der zweite Kommunikationsknoten zugreift, umfasst:
Verwenden des zweiten Kommunikationsknotens zum Analysieren der Zugriffsinformationen, um eine Kennung des Endgeräts und die von dem Endgerät übertragenen Daten zu erhalten, und Hinzufügen der Kennung des Endgeräts und der Daten zu einem Datenpaket, wobei das Datenpaket zumindest den Systemtyp und die ID-Informationen des zweiten Kommunikationsknotens trägt; und
Verwendung des zweiten Kommunikationsknotens zur Übertragung des Datenpakets an den ersten Kommunikationsknoten und Übertragung des Datenpakets an das Kernnetz über den ersten Kommunikationsknoten.

8. Kommunikationsverfahren nach Anspruch 6, wobei die Verwendung des dritten Kommunikationsknotens zum Einrichten des UE-Instanzkontextes, der dem Systemtyp des Endgerätes entspricht, um die DRB-Signalisierungsinteraktion zwischen dem UE-Instanzkontext und dem Endgerät abzuschließen, umfasst:
Verwenden des dritten Kommunikationsknotens, um den UE-Instanzkontext, der dem Systemtyp des Endgeräts entspricht, einzurichten, eine dem UE-Instanzkontext entsprechende Ressource SRB zuzuweisen, eine SRB-Signalisierungsinteraktion mit dem Endgerät abzuschließen und einen Initialisierungsprozess des UE-Instanzkontexts mit dem Kernnetz über den ersten Kommunikationsknoten abzuschließen; und
Verwendung des dritten Kommunikationsknotens, um einen Prozess der Zuweisung der DRB-Ressource und einen Prozess des Füllens eines Messparameters abzuschließen, nachdem der dritte Kommunikationsknoten und das Endgerät einen Prozess der Abfrage der UE-Fähigkeit und einen Prozess der Sicherheitskonfiguration abgeschlossen haben.

9. Kommunikationsverfahren nach einem der Ansprüche 6 bis 8, wobei das Verfahren weiterhin umfasst, wenn das Endgerät zwischen verschiedenen Systemen umschaltet:
Verwendung eines zweiten Quellkommunikationsknotens zur Weiterleitung einer von einem dritten Quellkommunikationsknoten übertragenen Umschaltanforderung an einen zweiten Zielkommunikationsknoten;
Verwenden des zweiten Zielkommunikationsknotens, um eine UE-Instanzkontextliste zu aktualisieren, und Benachrichtigen eines dritten Zielkommunikationsknotens, um einen UE-Instanzkontext basierend auf der UE-Instanzkontextliste zu erzeugen, wobei der UE-Instanzkontext einen Rekonfigurationsprozess mit dem Endgerät durchführt; und
Verwenden des zweiten Quell-Kommunikationsknotens, um eine vom dritten Ziel-Kommunikationsknoten übertragene Umschalt-Abschluss-Nachricht zu empfangen, und Benachrichtigen des dritten Quell-Kommunikationsknotens, um einen erfolgreich umgeschalteten UE-Instanz-Kontext freizugeben und die UE-Instanz-Kontext-Liste zu aktualisieren,
wobei die Verwendung des zweiten Quell-Kommunikationsknotens zum Empfangen der vom dritten Ziel-Kommunikationsknoten übertragenen Switch-Complete-Nachricht umfasst:
Verwenden des zweiten Quell-Kommunikationsknotens zum Empfangen der Switch-Complete-Nachricht, wobei die Switch-Complete-Nachricht von dem dritten Ziel-Kommunikationsknoten übertragen wird, der von dem zweiten Ziel-Kommunikationsknoten unterhalten wird, und über den zweiten Ziel-Kommunikationsknoten und den ersten Kommunikationsknoten weitergeleitet wird.

10. Kommunikationsverfahren nach einem der Ansprüche 6 bis 8, wobei eine Vielzahl von Endgeräten gleichzeitig von einem System A zu einem System B in derselben Zeitperiode umschalten, wenn das System A einem zweiten Kommunikationsknoten A und das System B einem zweiten Kommunikationsknoten B entspricht, wobei das Verfahren ferner umfasst:
wenn der zweite Kommunikationsknoten A feststellt, dass ein Leerlaufverhältnis in der UE-Instanzkontextliste größer oder gleich einem ersten eingestellten Wert ist, Verwenden des zweiten Kommunikationsknotens A, um einen dritten Kommunikationsknoten, der von dem zweiten Kommunikationsknoten A unterhalten wird, anzuweisen,
eine Ressource freizugeben, die einem Leerlauf-UE-Instanzkontext entspricht, und den ersten Kommunikationsknoten anzuweisen, eine Leerlaufressourcenliste des dritten Kommunikationsknotens zu aktualisieren; und
wenn der zweite Kommunikationsknoten B feststellt, dass das Leerlaufverhältnis in der UE-Instanzkontextliste kleiner als ein zweiter eingestellter Wert ist, Verwenden des zweiten Kommunikationsknotens B, um eine Ressource für den dritten Kommunikationsknoten von dem ersten Kommunikationsknoten anzufordern und einen dritten Kommunikationsknoten anzufordern, der von dem zweiten Kommunikationsknoten B verwaltet wird, um einen UE-Instanzkontext zu erstellen, der dem System B für einen nachfolgenden Zugriff des Endgeräts eines System B-Typs entspricht,
wobei das Verwenden des zweiten Kommunikationsknotens A, um den dritten Kommunikationsknoten, der von dem zweiten Kommunikationsknoten A unterhalten wird, anzuweisen, die Ressource freizugeben, die dem UE-Instanzkontext im Leerlauf entspricht, und den ersten Kommunikationsknoten anzuweisen, die Liste der Ressourcen im Leerlauf des dritten Kommunikationsknotens zu aktualisieren, umfasst:
Verwenden des zweiten Kommunikationsknotens A, um den freien UE-Instanzkontext in der UE-Instanzkontextliste zu löschen, Übertragen einer Anforderung zum Freigeben der Ressource, die dem freien UE-Instanzkontext entspricht, an den dritten Kommunikationsknoten, der von dem zweiten Kommunikationsknoten A verwaltet wird, basierend auf der UE-Instanzkontextliste mit dem gelöschten freien UE-Instanzkontext, um den dritten Kommunikationsknoten anzuweisen, die Ressource freizugeben, die dem freien UE-Instanzkontext entspricht, und Empfangen einer Ressourcenfreigabe-Erfolgsmeldung von dem dritten Kommunikationsknoten; und
Verwenden des zweiten Kommunikationsknotens A zum Übertragen einer Anforderung zum Aktualisieren einer freien Ressource des dritten Kommunikationsknotens an den ersten Kommunikationsknoten, um den ersten Kommunikationsknoten anzuweisen, die Liste der freien Ressourcen des dritten Kommunikationsknotens zu aktualisieren,
wobei die Verwendung des zweiten Kommunikationsknotens B zum Anfordern der Ressource für den dritten Kommunikationsknoten von dem ersten Kommunikationsknoten und zum Anfordern des dritten Kommunikationsknotens, der von dem zweiten Kommunikationsknoten B verwaltet wird, um den UE-Instanzkontext entsprechend dem System B zu erzeugen, umfasst:
Verwenden des zweiten Kommunikationsknotens B, um die Ressource für den dritten Kommunikationsknoten von dem ersten Kommunikationsknoten anzufordern, und wenn eine Ressource, die von dem dritten Kommunikationsknoten, der von dem zweiten Kommunikationsknoten A verwaltet wird, freigegeben wird, erfasst wird, Übertragen einer Anforderung zur Erzeugung des UE-Instanzkontextes, der dem System B entspricht, an den dritten Kommunikationsknoten, der von dem zweiten Kommunikationsknoten B verwaltet wird, gemäß der Information der erfassten Ressource des dritten Kommunikationsknotens; und
nachdem der zweite Kommunikationsknoten B eine Erstellungserfolgsnachricht des UE-Instanzkontextes, der dem System B entspricht, von dem dritten Kommunikationsknoten empfängt, unter Verwendung des zweiten Kommunikationsknotens B, um den UE-Instanzkontext, der dem System B entspricht, in die UE-Instanzkontextliste hinzuzufügen und eine Initialisierung durchzuführen.

11. Speichermedium, das Computerprogramme speichert, wobei die Computerprogramme, wenn sie von einem Prozessor ausgeführt werden, das Verfahren nach einem der Ansprüche 1 bis 4 oder das Verfahren nach einem der Ansprüche 6 bis 10 implementieren.

## Revendications

1. Station de base prenant en charge des systèmes multiples distribués, dans laquelle les systèmes multiples se réfèrent à des processus multiples d'un terminal utilisant des structures d'interface aérienne respectives et des processus de signalisation correspondants pour compléter des services respectifs, dans laquelle
la station de base
comprend un premier nœud de communication (121), un deuxième nœud de communication (122) et un troisième nœud de communication (123) géré par le deuxième nœud de communication;
le premier nœud de communication (121) est configuré pour transmettre des données à un réseau central, les données étant transmises par un terminal et acheminées par le second nœud de communication (122);
le deuxième nœud de communication (122) est configuré pour diffuser une première information, dans laquelle la première information est au moins utilisée pour notifier au terminal un type de système du deuxième nœud de communication (122) et les informations requises pour que le terminal puisse accéder au deuxième nœud de communication (122);
le deuxième nœud de communication (122) est en outre configuré pour:
recevoir et détecter les informations d'accès transmises par le terminal,
déterminer un type de système du terminal en fonction des informations d'accès, et
après avoir déterminé que le type de système du terminal est identique au type de système du deuxième nœud de communication (122), déterminer qu'il n'est pas nécessaire d'établir le troisième nœud de communication (123) et transmettre les données transmises par le terminal au premier nœud de communication (121); sinon, notifier au troisième nœud de communication (123) maintenu par le deuxième nœud de communication (122) d'établir un contexte d'instance d'équipement d'utilisateur (UE);
le troisième nœud de communication (123) est configuré pour, à réception d'une notification du deuxième nœud de communication (122), établir le contexte d'instance d'UE correspondant au type de système du terminal afin d'achever une interaction de signalisation de support radio de données DRB entre le contexte d'instance d'UE et le terminal.

2. Station de base selon la revendication 1, dans laquelle le second nœud de communication (122) comprend:
un module de création, configuré pour réaliser l'autocréation du deuxième nœud de communication sur la base des deuxièmes informations de configuration prédéfinies et pour lancer l'établissement du troisième nœud de communication (123);
un module de diffusion, configuré pour diffuser la première information, dans lequel la première information est au moins utilisée pour notifier au terminal le type de système du deuxième nœud de communication (122) et les informations requises pour que le terminal puisse accéder au deuxième nœud de communication (122);
un module de traitement de la détermination, configuré pour:
recevoir et détecter les informations d'accès transmises par le terminal,
déterminer le type de système du terminal en fonction des informations d'accès, et
en réponse à la détermination que le type de système du terminal est identique à un type de système de la deuxième communication, déclencher un module de transmission de données; sinon, notifier le troisième nœud de communication (123) géré par le deuxième nœud de communication (122) pour établir le contexte d'instance de l'équipement d'utilisateur (UE); et
le module de transmission de données, qui est configuré pour, lorsqu'il est déclenché par le module de traitement de la détermination, transmettre les données transmises par le terminal au premier nœud de communication (121),
dans lequel le module de transmission de données comprend:
une unité de traitement d'analyse, configurée pour analyser les informations d'accès afin d'obtenir un identifiant du terminal et les données transmises par le terminal, et pour ajouter l'identifiant du terminal et les données à un paquet de données, le paquet de données comportant au moins le type de système et les informations ID du deuxième nœud de communication (122); et
une unité de transmission, configurée pour transmettre le paquet de données au premier nœud de communication (121).

3. Station de base selon la revendication 1, dans laquelle le troisième nœud de communication (123) comprend:
une unité d'établissement, configurée pour établir le contexte d'instance d'UE correspondant au type de système du terminal et allouer une ressource de support radio de signalisation SRB correspondant au contexte d'instance d'UE; achever une interaction de signalisation SRB avec le terminal et achever un processus d'initialisation du contexte d'instance d'UE avec le réseau central par l'intermédiaire du premier nœud de communication (121); et
une unité d'attribution, configurée pour achever un processus d'attribution de la ressource DRB et un processus de remplissage d'un paramètre de mesure, après que le troisième nœud de communication (123) et le terminal d'un nouveau système ont achevé un processus d'enquête sur la capacité de l'UE et un processus de configuration de la sécurité.

4. Station de base selon l'une des revendications 1 à 3, dans laquelle lorsque le terminal passe d'un système à l'autre,
le deuxième nœud de communication (122) est en outre configuré pour transmettre une demande de commutation transmise par un troisième nœud de communication dans un système actuel à un deuxième nœud de communication dans un système cible; recevoir un message de fin de commutation transmis par un troisième nœud de communication (123) dans le système cible, notifier au troisième nœud de communication (123) dans le système actuel de libérer un contexte d'instance d'UE commuté avec succès et de mettre à jour une liste de contextes d'instance d'UE; et
le deuxième nœud de communication (122) est en outre configuré pour mettre à jour la liste des contextes d'instance d'UE et notifier au troisième nœud de communication (123) dans le système actuel de créer un contexte d'instance d'UE sur la base de la liste des contextes d'instance d'UE.

5. Station de base selon l'une des revendications 1 à 3, dans laquelle lorsqu'une pluralité de terminaux passent simultanément d'un système A à un système B au cours d'une même période de temps,
le deuxième nœud de communication (122) est en outre configuré pour, en réponse à la détermination qu'un rapport d'inactivité dans la liste des contextes d'instance UE est supérieur ou égal à une première valeur définie, demander à un troisième nœud de communication dans un système actuel de libérer une ressource correspondant à un contexte d'instance UE inactif et demander au premier nœud de communication (121) de mettre à jour une liste de ressources inactives du troisième nœud de communication (123); et
le deuxième nœud de communication (122) est en outre configuré pour, en réponse à la détermination que le rapport d'inactivité dans la liste des contextes d'instance UE est inférieur à une deuxième valeur définie, demander au premier nœud de communication une ressource pour le troisième nœud de communication (123) et demander au troisième nœud de communication (123) dans le système actuel de créer un contexte d'instance UE correspondant au système B pour l'accès ultérieur du terminal de type système B.

6. Méthode de communication d'une station de base prenant en charge des systèmes multiples distribués, dans laquelle les systèmes multiples se réfèrent à des processus multiples d'un terminal utilisant des structures d'interface aérienne respectives et des processus de signalisation correspondants pour compléter des services respectifs, la station de base comprend un premier nœud de communication (121), un deuxième nœud de communication (122) et un troisième nœud de communication (123) entretenu par le deuxième nœud de communication, dans laquelle
la méthode de communication comprend:
utiliser (1101) un deuxième nœud de communication pour diffuser une première information, dans laquelle la première information est au moins utilisée pour notifier à un terminal un type de système du deuxième nœud de communication et les informations requises pour que le terminal accède au deuxième nœud de communication;
utiliser (1102) le second nœud de communication pour recevoir et détecter les informations d'accès transmises par le terminal, et déterminer un type de système du terminal en fonction des informations d'accès; et
utiliser (1103) le deuxième nœud de communication pour: en réponse à la détermination que le type de système du terminal est identique au type de système du deuxième nœud de communication, déterminer qu'il n'est pas nécessaire d'établir un troisième nœud de communication, transmettre les données transmises par le terminal à un réseau central via un premier nœud de communication auquel le deuxième nœud de communication accède; sinon, notifier au troisième nœud de communication maintenu par le deuxième nœud de communication d'établir un contexte d'instance d'équipement utilisateur, UE, correspondant au type de système du terminal afin de compléter une interaction de signalisation de support radio de données, DRB, entre le contexte d'instance UE et le terminal.

7. Méthode de communication selon la revendication 6, dans laquelle l'utilisation du second nœud de communication pour transmettre les données transmises par le terminal au réseau central via le premier nœud de communication auquel le second nœud de communication accède comprend:
utiliser le second nœud de communication pour analyser les informations d'accès afin d'obtenir un identifiant du terminal et les données transmises par le terminal, et ajouter l'identifiant du terminal et les données à un paquet de données, le paquet de données contenant au moins le type de système et les informations ID du second nœud de communication; et
utiliser le deuxième nœud de communication pour transmettre le paquet de données au premier nœud de communication, et transmettre le paquet de données au réseau central via le premier nœud de communication.

8. Méthode de communication selon la revendication 6, dans laquelle l'utilisation du troisième nœud de communication pour établir le contexte d'instance UE correspondant au type de système du terminal pour compléter l'interaction de signalisation DRB entre le contexte d'instance UE et le terminal comprend:
utiliser le troisième nœud de communication pour établir le contexte d'instance d'UE correspondant au type de système du terminal, allouer une ressource de support radio de signalisation SRB correspondant au contexte d'instance d'UE, réaliser une interaction de signalisation SRB avec le terminal et réaliser un processus d'initialisation du contexte d'instance d'UE avec le réseau central par l'intermédiaire du premier nœud de communication; et
utiliser le troisième nœud de communication pour achever un processus d'attribution de la ressource DRB et un processus de remplissage d'un paramètre de mesure, après que le troisième nœud de communication et le terminal ont achevé un processus d'interrogation de la capacité de l'UE et un processus de configuration de la sécurité.

9. Méthode de communication selon l'une des revendications 6 à 8, dans laquelle, lorsque le terminal passe d'un système à l'autre, la méthode comprend en outre:
utiliser un deuxième nœud de communication source pour transmettre une demande de commutation transmise par un troisième nœud de communication source à un deuxième nœud de communication cible;
utiliser le deuxième nœud de communication cible pour mettre à jour une liste de contextes d'instances UE, et notifier un troisième nœud de communication cible pour créer un contexte d'instances UE sur la base de la liste de contextes d'instances UE, le contexte d'instances UE effectuant un processus de reconfiguration avec le terminal; et
utiliser le deuxième nœud de communication source pour recevoir un message de fin de commutation transmis par le troisième nœud de communication cible, et notifier au troisième nœud de communication source la libération d'un contexte d'instance UE commuté avec succès et la mise à jour de la liste des contextes d'instance UE,
dans lequel l'utilisation du deuxième nœud de communication source pour recevoir le message de fin de commutation transmis par le troisième nœud de communication cible comprend:
utiliser le deuxième nœud de communication source pour recevoir le message de fin de commutation, le message de fin de commutation étant transmis par le troisième nœud de communication cible maintenu par le deuxième nœud de communication cible et transmis via le deuxième nœud de communication cible et le premier nœud de communication.

10. Méthode de communication selon l'une des revendications 6 à 8, dans laquelle plusieurs terminaux passent simultanément d'un système A à un système B au cours d'une même période, lorsque le système A correspond à un deuxième nœud de communication A et que le système B correspond à un deuxième nœud de communication B, la méthode comprend en outre:
lorsque le deuxième nœud de communication A détermine qu'un ratio d'inactivité dans la liste des contextes d'instance UE est supérieur ou égal à une première valeur définie, utiliser le deuxième nœud de communication A pour demander à un troisième nœud de communication géré par le deuxième nœud de communication A de libérer une ressource correspondant à un contexte d'instance UE inactif et demander au premier nœud de communication de mettre à jour une liste de ressources inactives du troisième nœud de communication; et
lorsque le deuxième nœud de communication B détermine que le taux d'inactivité dans la liste des contextes d'instance UE est inférieur à une deuxième valeur définie, le deuxième nœud de communication B demande au premier nœud de communication une ressource pour le troisième nœud de communication et demande à un troisième nœud de communication géré par le deuxième nœud de communication B de créer un contexte d'instance UE correspondant au système B pour l'accès ultérieur du terminal d'un type de système B,
dans lequel l'utilisation du deuxième nœud de communication A pour demander au troisième nœud de communication géré par le deuxième nœud de communication A de libérer la ressource correspondant au contexte d'instance d'UE inactif et pour demander au premier nœud de communication de mettre à jour la liste des ressources inactives du troisième nœud de communication comprend:
utiliser le deuxième nœud de communication A pour supprimer le contexte d'instance UE inactif dans la liste des contextes d'instance UE, transmettre une demande de libération de la ressource correspondant au contexte d'instance UE inactif au troisième nœud de communication géré par le deuxième nœud de communication A sur la base de la liste des contextes d'instance UE avec le contexte d'instance UE inactif supprimé pour demander au troisième nœud de communication de libérer la ressource correspondant au contexte d'instance UE inactif, et recevoir du troisième nœud de communication un message de réussite de la libération de la ressource; et
en utilisant le deuxième nœud de communication A pour transmettre au premier nœud de communication une demande de mise à jour d'une ressource inactive du troisième nœud de communication, afin d'ordonner au premier nœud de communication de mettre à jour la liste des ressources inactives du troisième nœud de communication,
dans lequel l'utilisation du deuxième nœud de communication B pour demander la ressource du troisième nœud de communication au premier nœud de communication et demander au troisième nœud de communication géré par le deuxième nœud de communication B de créer le contexte d'instance d'UE correspondant au système B comprend:
utiliser le deuxième nœud de communication B pour demander au premier nœud de communication la ressource pour le troisième nœud de communication et, lorsqu'une ressource libérée par le troisième nœud de communication géré par le deuxième nœud de communication A est acquise, transmettre une demande de création du contexte d'instance d'UE correspondant au système B au troisième nœud de communication géré par le deuxième nœud de communication B en fonction des informations de la ressource acquise du troisième nœud de communication; et
après que le deuxième nœud de communication B a reçu du troisième nœud de communication un message de réussite de la création du contexte d'instance UE correspondant au système B, utiliser le deuxième nœud de communication B pour ajouter le contexte d'instance UE correspondant au système B à la liste des contextes d'instance UE et procéder à l'initialisation.

11. Support de stockage, stockant des programmes d'ordinateur, dans lequel, lorsque les programmes d'ordinateur sont exécutés par un processeur, ils mettent en œuvre la méthode selon l'une des revendications 1 à 4 ou la méthode selon l'une des revendications 6 à 10.
